# EUROPEAN PATENT SPECIFICATION

(11) **EP 2 861 484 B1**
(45) Date of publication and mention of the grant of the patent: **25.01.2017**
(21) Application number: 13807803.5
(22) Date of filing: 11.06.2013
(51) Int. Cl.: B62D 35/00, B60S 1/66

(54) **AIR DEFLECTOR AND FREIGHT VEHICLE**
LUFTUMLENKBLECH UND FRACHTFAHRZEUG
DÉFLECTEUR D'AIR ET VÉHICULE DE TRANSPORT DE MARCHANDISES

(30) Priority: 18.06.2012 SE 1250641
(43) Date of publication of application: 22.04.2015
(73) Proprietor: Scania CV AB, 151 87 Södertälje (SE)
(72) Inventor: NOGHABAI, Kamran, S-129 50 Hägersten (SE)
(74) Representative: Scania CV AB
(86) International application number: PCT/SE2013/050668
(87) International publication number: WO 2013/191616

(56) References cited:
- WO-A1-2011/096873
- DE-A1- 2 726 739
- GB-A- 1 490 291
- US-A- 5 903 389

## Description

### TECHNICAL FIELD

The invention relates to an air deflector at a front corner of a cab of a freight vehicle. It relates also to a freight vehicle provided with such a deflector.

### BACKGROUND

The configuration of the front corners of a freight vehicle cab greatly affects the vehicle's air resistance and the extent to which the adjacent cab side becomes dirty. A known air deflector intended to prevent such dirtying comprises usually a curved shield extending round the corner to guide round the corner the air flow induced by the vehicle's forward movement, so that the cab side is continually swept clean by an air flow which prevents its being dirtied from below by spray and dirt particles from nearby wheel housings.

DE2726739 A1 refers to an air deflector at a front corner of a cab of a vehicle. The air is led round the cab's front corner to the adjacent side surfaces and thereby prevents dirtying of the door sides on the side surfaces. To perform its function, a deflector of this kind needs to be relatively large, thus increasing not only the air resistance and fuel consumption but also the weight and cost of the vehicle.

SE534570 C2 refers to an air deflector provided with a swirl generator which converts an air flow induced by the vehicle's forward movement to a swirling flow which follows the vehicle side adjacent to the corner and prevents the side from being dirtied from below. The swirl generator consists of a vertical guiderail in the form of an extension of the cab's lower corner panel. The guiderail leads the air flow round the cab corner towards the wheel housing aperture, thereby guiding away the flow out of the wheel housing. This may take place without appreciably affecting the air resistance. An air deflector of this kind does however need a relatively large height of guiderail to ensure that the deflected flow is sufficient to lead away the air flow out from the wheel housing so that dirtying of the cab side is prevented. However, the space below the corner panel is limited and the relative movement between cab and chassis does not leave sufficient space to accommodate the necessary height of guiderail. This solution is therefore not usable for example on vehicles with low chassis height, since they have relatively little springing space and small gaps between cab and chassis.

### SUMMARY OF THE INVENTION

One object of the invention is to propose an improved air deflector which can minimise the air resistance and can, with relatively small dimensions, reduce the amount of dirtying of the cab side.

This is achieved by the features indicated in the characterising part of claim 1. A swirl generator comprising a duct which is open downwards, is connected to the corner of the cab and extends curvingly round the corner from the front of the cab to the side of the cab leads into the open duct the air flow induced by the vehicle's forward movement. The duct comprises partly an upper end surface and partly opposite sides directed downwards, at least one of which has a free lower end edge. The open duct disturbs the air flow minimally and thereby minimises the air resistance. What is crucial for the effectiveness of the duct is how much air flow can be captured in the air space, and the larger the duct the greater the flow which can be captured.

The insight on which the invention is based is endeavouring to create an air deflector which disturbs the air flow round the corner as little as possible, in order thereby to minimise the air resistance. The duct causes the air flow, without any disturbing leakage of air to adjoining spaces, e.g. an engine space situated between cab and chassis, to pass through the space between cab and chassis round the cab corner so that the air resistance is reduced while at the same time the swirl generated saves the cab side from being dirtied by the dirty air outflow from the wheel housing.

A further object of the invention is to propose an air deflector usable on a plurality of different truck models, i.e. models with different springing characteristics between cab and chassis and with different amounts of space between chassis and cab.

This is achieved by the duct constituting an air space between the corner of the cab and the corner of an underlying chassis of the vehicle, which cab and chassis are sprung relative to one another.

A further object of the invention is to propose an air deflector of simple construction and an air deflector which weighs less and has better tightness into the engine space.

This is achieved by the duct's upper end surface connecting together the two downward-directed opposite sides, by the duct's upper end surface being integral with either or both of the two opposite sides and by the duct being firmly connected either to the cab or to the chassis. The open duct may then be preconnected firmly to the corner panel and the air deflector or the chassis. Existing vehicles may then also be post-equipped with air deflectors according to the invention, replacing an old corner panel which may possibly have an older type of deflector.

Other features and advantages of the invention may be indicated by the claims and the description set out below of embodiment examples in conjunction with the attached drawings.

### BRIEF DESCRIPTION OF DRAWINGS

FIG. 1 is a view obliquely from above of a front corner of a freight vehicle cab provided with an air deflector according to the invention;
FIG. 2 is a side view with portions cut away of a front corner according to FIG. 1;
FIG. 3 is a view on a larger scale of a region provided with an air deflector in FIG. 2;
FIG. 4 is a view on a larger scale of a region provided with an alternative embodiment of the deflector;
FIG. 5 is a view from below of a separate air deflector according to FIG. 3.

### DETAILED DESCRIPTION OF EMBODIMENT EXAMPLES

The present invention will now be described with reference to the attached drawings. The same reference notations are used throughout the drawings for items which have the same or similar functions.

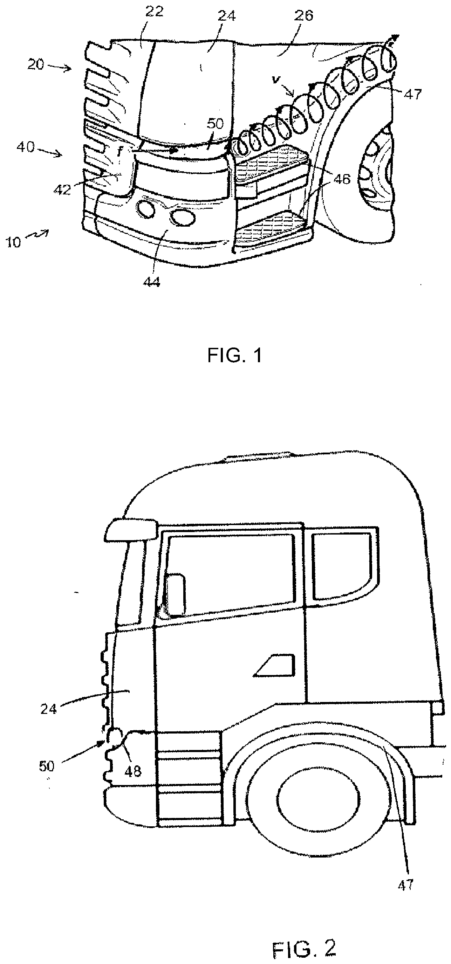

The freight vehicle 10 depicted by way of example in FIG. 1 has a cab 20 which is springingly suspended on a chassis 40 in a manner not depicted in detail. The vehicle's cab front corner takes the form of a corner panel 24 delineated between an upper laterally situated front panel 22 and a side 26 which incorporates a side door of the vehicle. The corner of the chassis 40 takes the form of a section 44 of a bumper which is situated between a lower laterally situated front panel 42 and a pair of boarding steps 46.

In the corner region between the cab 20 and the chassis 40 there is a space 48 which is open outwards, extends round the corner below substantially the whole of the corner panel 24 and continues along the lower edge of the door 26, see FIG. 2. The space 48 is provided because the cab 20, which is springingly supported with overlap on top of the chassis 40, needs vertical clearance for its springing movements relative to the chassis.

An air deflector 50 according to the invention is provided in the space 48 and extends below the whole of the corner panel 24. Although only one cab front corner is depicted in FIGS. 1-3, there is of course also a mirror-image similar air deflector at the vehicle's undepicted other cab front corner. The deflector 50 is of the type which is referred to as a swirl generator and may be described as a surface which acts aerodynamically and consists for example of a vane or the like which creates a swirl.

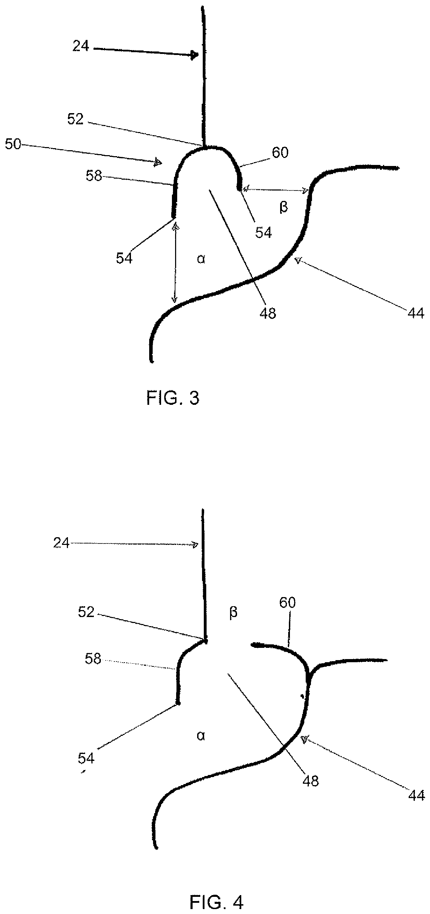

Although an air deflector according to the invention may have other known shapes of swirl generators, the deflector 50 according to a preferred embodiment of the invention is provided with a ductlike air-guiding means 52 which is open downwards (FIG. 3). The duct 52 is connected to the cab corner 24 and extends curvingly round substantially the whole of the corner from the cab front to the cab side 26. It has two opposite sides 58, 60 which are directed downwards and have respective free lower end edges 54 and an upper, at least partly horizontal, end surface 56 which connects together the sides 58, 60. The duct 52 constitutes an air space 48 between the corner 24 of the cab and the corner 44 of an underlying chassis 40 of the vehicle, which cab and chassis are sprung relative to one another.

The downwardly open duct 52 has two sides directed downwards, viz. an duct outer side 58 which is outer relative to the cab's interior and is with advantage of such a height that there is no risk of its free lower end edge 54 colliding with the bumper corner section 44 (FIG. 3) during large vertical springing movements of the cab, and a duct inner side 60, the height of which is substantially less than that of the duct outer side 58 to avoid colliding with the bumper corner section 44. The duct inner side 60 is situated horizontally the nearer to the corner section 44. The two duct sides 58, 60 both have free lower end edges 54 in the embodiment depicted in FIG. 3. The relative movement in the vertical direction between the cab 20 and the chassis 40 may be ± 50 mm and limits the height of the duct outer side 58. It is advantageous if the duct outer side 58 extends downwards as far as possible, but there needs to be a minimum distance α between its lower end edge 54. The horizontal relative movement between the cab 20 and the chassis 40 may be ± 20 mm and there needs to be a minimum distance β between the bumper corner section 44 and the duct inner side 60 to prevent their colliding. The smaller the distance β, the better the tightness to the engine space. At the same time, the distance α is with advantage greater than the distance β, and in one advantageous embodiment the distance α is more than double the distance β. In an alternative advantageous embodiment the duct inner side 60 would be made of flexible material, e.g. rubber, to allow the duct inner side 60 to extend substantially right down to the bumper corner section 44 and be deformed by colliding with the corner section during large springing movements. Air leakage to adjoining spaces, e.g. an engine space situated between cab and chassis, is thus minimised.

An air flow f (FIG. 1) which is induced by the vehicle's forward movement and enters the air space 48 will encounter the duct/deflector 50 with the result that the duct captures part of the flow *f* and converts it to a swirling flow *v* which, after leaving the duct, carries the air along the vehicle's side 26 in the manner schematically depicted in FIG. 1. More specifically, in the example depicted the swirling flow *v* will substantially follow the lower portion of the side of the door 26 and may well be guided upwards by the sloping surface of a mudguard 47 of the vehicle. The swirling flow *v* prevents spray and other dirt particles from the wheel housing from reaching the cab side and the side of the door 26. Any dirty particles captured by the swirling flow are carried past the cab 20.

FIG. 4 depicts an alternative embodiment of the air deflector 50. In this alternative the inner side 60 of the downwardly open duct 52 is connected to the chassis 44 and therefore has no free lower end but instead a free upper end. The duct inner side is substantially integral with the upper end surface 56 and its height is such that its upper end surface 56 is at a distance β from the inside of the air deflector but not so close as to collide with the deflector during large springing movements of the chassis. Here again the distance α is greater than β, as indicated above.

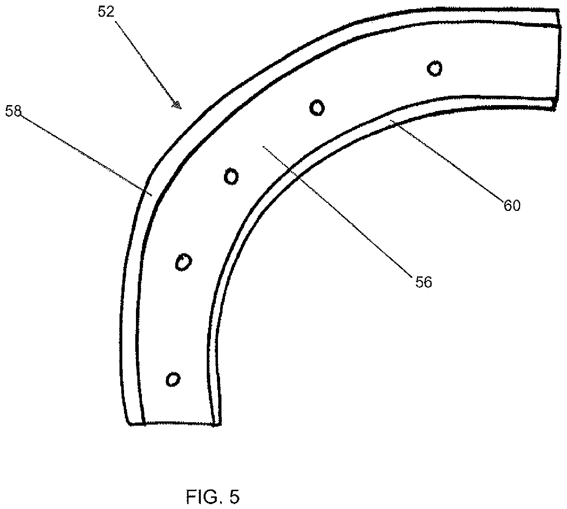

FIG. 5 depicts an example of an embodiment of an air deflector 50 separated from the vehicle and with the duct 52 in the form of a single element. The duct's outer side 58 extends substantially along, and follows the curvature of, the whole of the deflector 50. The duct's upper end surface 56 may be provided with apertures for fastening devices by which the deflector may be connected to the cab corner panel 24. The deflector and the duct may for example be made of suitable plastic material. The deflector 50 according to FIG. 3 and its duct 52 may also be integral with the corner panel 24 or, in the embodiment according to FIG. 4, integral with both the cab corner panel 24 and the chassis corner panel 44. It is also possible for only the duct inner side 60 to be integral with the corner panel 24 and for the duct outer side 58 to be thereafter attached to the duct inner side by necessary fastening devices. An alternative possibility is that the duct inner side 60 may be attached to the lower edge of the corner panel 24 by necessary fastening devices, followed by the duct outer side 58 being attached to the upper end surface 56 of the duct inner side.

The description set out above is primarily intended to facilitate comprehension and no unnecessary limitations of the invention are to be inferred from it. The modifications which will be obvious to one skilled in the art from perusing the description may be effected without departing from the concept of the invention or the scope of the claims set out below.

## Claims

1. An air deflector (50) at a front corner (24) of a cab (20) of a freight vehicle (10), comprising a swirl generator (50) which converts an air flow induced by the vehicle's forward movement to a swirling flow (v) which follows a side (26) of the vehicle (10) situated adjacent to the corner (24) and prevents dirtying of the side (26) from below, **characterised in that** the swirl generator (50) comprises a duct (52) which is open downwards, is connected to the cab corner (24), extends curvingly round the corner (24) from the cab front to the cab side (26) and comprises partly an upper end surface (56) and partly opposite sides (58, 60) which are directed downwards, at least one of these sides having a free lower end edge (54), which duct (52) constitutes an air space (48) between the corner (24) of the cab and the corner (44) of an underlying chassis (40) of the vehicle, which cab (20) and chassis (40) are sprung relative to one another.

2. An air deflector according to claim 1, in which the upper end surface (56) connects together the two opposite sides (58, 60) which are directed downwards.

3. An air deflector according to any one of the foregoing claims, in which the duct's upper end surface (56) is integral with either or both of the two opposite sides (58, 60).

4. An air deflector according to any one of the foregoing claims, in which the duct (52) is firmly connected either to the cab (20) or partly to both the cab (20) and the chassis (40).

5. An air deflector according to any one of the foregoing claims, in which the duct (52) is firmly connected to the cab (20) and has a free end edge (54) on the side (60) which is inner relative to the cab (20), which side (60) is of smaller height than the duct outer side (58) and has its free end edge (54) close to the corner portion of the underlying chassis (40) for minimisation of air flow to a space within between cab and chassis.

6. An air deflector according to claim 1, in which the inner side (60) of the duct (52) has its lower end edge (54) connected to the chassis (40) and has a free upper end edge (54) close to the corner portion of the cab (20), whereas the duct outer side (58) is connected to the cab (20) and has its free end edge (54) close to the corner portion of the underlying chassis (40).

7. An air deflector according to claim 6, in which the outer of the opposite duct sides (58) is integral with the cab's outer panel (24).

8. An air deflector according to any one of the foregoing claims, in which the duct's sides (58, 60) are made wholly or partly of flexible plastic material.

9. A freight vehicle (10) provided with an air deflector according to any one of the foregoing claims.

## Patentansprüche

1. Luftumlenker (50) an einem vorderen Randbereich (24) einer Kabine (20) eines Frachtfahrzeugs (10), der einen Wirbelerzeuger (50) umfasst, der einen Luftstrom, der durch die Vorwärtsbewegung des Fahrzeugs induziert wird, in eine Wirbelströmung (v) umwandelt, die einer Seite (26) des Fahrzeugs (10) folgt, die in der Nähe des Randbereichs (24) angeordnet ist und das Verschmutzen der Seite (26) von unten verhindert, **dadurch gekennzeichnet, dass**
der mit dem Kabinenrandbereich (24) verbundene Wirbelerzeuger (50) einen Kanal (52) umfasst, der nach unten hin offen ist, sich von der Kabinenfront zu der Kabinenseite (26) gekrümmt um den Randbereich (24) erstreckt und teilweise eine obere Endfläche (56) und teilweise gegenüberliegenden Seiten (58, 60) umfasst, die nach unten gerichtet sind, wobei wenigstens eine dieser Seiten eine freie untere Endkante (54) aufweist, wobei der Kanal (52) zwischen dem Randbereich (24) der Kabine und dem Randbereich (44) eines untenliegenden Chassis (40) des Fahrzeugs einen Luftraum (48) ausbildet, wobei die Kabine (20) und das Chassis (40) relativ zueinander gefedert sind.

2. Luftumlenker nach Anspruch 1, in dem die obere Endfläche (56) die zwei gegenüberliegenden Seiten (58, 60), die nach unten gerichtet sind, miteinander verbindet.

3. Luftumlenker nach einem der vorherigen Ansprüche, in dem die obere Endfläche (56) des Kanals mit einer oder mit beiden der zwei gegenüberliegenden Seiten (58, 60) einstückig ausgebildet ist.

4. Luftumlenker nach einem der vorherigen Ansprüche, in dem der Kanal (52) entweder fest mit der Kabine (20) oder teilweise mit der Kabine (20) und dem Chassis (40) verbunden ist.

5. Luftumlenker nach einem der vorherigen Ansprüche, in dem der Kanal (52) fest mit der Kabine (20) verbunden ist und an der Seite (60) eine freie Endkante (54) aufweist, die relativ zu der Kabine (20) verborgen ist, wobei die Seite (60) eine geringere Höhe als die Kanalaußenseite (58) hat und seine freie Endkante (54) in der Nähe des Eckabschnitts des untenliegenden Chassis (40) zum Minimieren des Luftstroms zu einem Bereich im Inneren der Kabine und des Chassis aufweist.

6. Luftumlenker nach Anspruch 1, in dem die Innenseite (60) des Kanals (52) über seine untere Endkante (54) mit dem Chassis (40) verbunden ist und in der Nähe des Eckabschnitts der Kabine (20) eine freie obere Endkante (54) aufweist, während die Kanalaußenseite (58) mit der Kabine (20) verbunden ist und in der Nähe des Eckabschnitts des untenliegenden Chassis (40) seine freie Endkante (54) aufweist.

7. Luftumlenker nach Anspruch 6, in dem der Äußere der gegenüberliegenden Kanalseiten (58) einstückig mit der äußeren Abdeckung (24) der Kabine ausgebildet ist.

8. Luftumlenker nach einem der vorherigen Ansprüche, in dem die Seiten (58, 60) des Kanals gänzlich oder teilweise aus einem flexiblen Kunststoffmaterial gebildet sind.

9. Frachtfahrzeug (10), das mit einem Luftumlenker nach einem der vorherigen Ansprüche versehen ist.

## Revendications

1. Déflecteur d'air (50) au niveau d'un coin avant (24) d'une cabine (20) d'un véhicule de fret (10), comprenant un générateur de tourbillon (50) qui convertit un écoulement d'air induit par le déplacement vers l'avant du véhicule en un écoulement tourbillonnant (v) qui suit un côté (26) du véhicule (10) situé au voisinage du coin (24) et qui empêche une salissure du côté (26) à partir du dessous, **caractérisé en ce que** le générateur de tourbillon (50) comprend un conduit (52) qui est ouvert vers le bas, qui est relié au coin de cabine (24), qui s'étend en courbe autour du coin (24) de l'avant de cabine au côté de cabine (26) et qui comprend partiellement une surface d'extrémité supérieure (56) et des côtés partiellement opposés (58, 60) qui sont dirigés vers le bas, au moins l'un de ces côtés comportant un bord d'extrémité inférieure libre (54), ce conduit (52) constituant un espace d'air (48) entre le coin (24) de la cabine et le coin (44) d'un châssis sous-jacent (40) du véhicule, cette cabine (20) et ce châssis (40) étant amortis l'un par rapport à l'autre.

2. Déflecteur d'air selon la revendication 1, dans lequel la surface d'extrémité supérieure (56) relie l'un à l'autre les deux côtés opposés (58, 60) qui sont dirigés vers le bas.

3. Déflecteur d'air selon l'une quelconque des revendications précédentes, dans lequel la surface d'extrémité supérieure (56) du conduit est intégrée à l'un ou l'autre ou aux deux des deux côtés opposés (58, 60).

4. Déflecteur d'air selon l'une quelconque des revendications précédentes, dans lequel le conduit (52) est fermement relié soit à la cabine (20), soit partiellement tout à la fois à la cabine (20) et au châssis (40).

5. Déflecteur d'air selon l'une quelconque des revendications précédentes, dans lequel le conduit (52) est fermement relié à la cabine (20) et comporte un bord d'extrémité libre (54) sur le côté (60) qui est intérieur vis-à-vis de la cabine (20), ce côté (60) ayant une hauteur inférieure à celle du côté extérieur de conduit (58) et ayant son bord d'extrémité libre (54) qui est proche de la partie de coin du châssis sous-jacent (40) pour la minimisation d'un écoulement d'air vers un espace dans l'intérieur entre la cabine et le châssis.

6. Déflecteur d'air selon la revendication 1, dans lequel le côté intérieur (60) du conduit (52) a son bord d'extrémité inférieure (54) qui est relié au châssis (40) et a un bord d'extrémité supérieure libre (54) qui est proche de la partie de coin de la cabine (20), tandis que le côté extérieur de conduit (58) est relié à la cabine (20) et a son bord d'extrémité libre (54) qui est proche de la partie de coin du châssis sous-jacent (40).

7. Déflecteur d'air selon la revendication 6, dans lequel l'extérieur des côtés de conduit opposés (58) est intégré au panneau extérieur (24) de la cabine.

8. Déflecteur d'air selon l'une quelconque des revendications précédentes, dans lequel les côtés (58, 60) du conduit sont réalisés totalement ou partiellement en une matière plastique souple.

9. Véhicule de fret (10) muni d'un déflecteur d'air selon l'une quelconque des revendications précédentes.
